# EUROPEAN PATENT SPECIFICATION

(11) **EP 3 760 350 B1**
(45) Date of publication and mention of the grant of the patent: **20.12.2023**
(21) Application number: 19183578.4
(22) Date of filing: 01.07.2019
(51) Int. Cl.: B23B 27/00, B23B 27/08, B23B 29/04, B23C 5/00, B23C 5/08

(54) **METAL CUTTING TOOL COMPRISING A VIBRATION DAMPING MEMBER**
METALLSCHNEIDWERKZEUG MIT SCHWINGUNGSDÄMPFER
OUTIL DE COUPE MÉTALLIQUE COMPRENANT UN ÉLÉMENT D'AMORTISSEMENT DE VIBRATIONS

(43) Date of publication of application: 06.01.2021
(73) Proprietor: AB Sandvik Coromant, 811 81 Sandviken (SE)
(72) Inventor: MAGNEVALL, Martin, 371 38 Karlskrona (SE); WU, Peng, 811 30 Sandviken (SE); LEVIN, Sebastian, 811 34 Sandviken (SE)
(74) Representative: Sandvik

(56) References cited:
- JP-A- H0 453 701
- JP-A- S63 256 308
- JP-A- 2003 062 703
- JP-U- S63 198 503
- US-A1- 2018 229 315

## Description

### TECHNICAL FIELD OF THE INVENTION

The present invention belongs to the technical field of metal cutting. More specifically the present invention belongs to the field of cutting tools comprising vibration damping means.

### BACKGROUND OF THE INVENTION AND PRIOR ART

The present invention refers to a turning tool according to the preamble of claim 1. In other words, the present invention relates to a cutting tool for metal cutting, comprising a tool body, wherein the tool body comprises an insert seat, wherein a recess is formed in the tool body, wherein tool body comprises vibration damping means.

Increased productivity to reduce manufacturing costs in metal cutting operations is critical under the fierce competition in the metal cutting industry. Faster machining and lower cycle times are constantly targeted to improve productivity. To meet these demands, an increase of process parameters, such as cutting speed, feed velocity and depth of cut are required. With the elevation of the process parameters, longer and slender cutting tools are often prone to regenerative vibration, i.e. chatter vibrations. These vibrations often result in a loud and noisy cutting process and a bad surface finish as well as shortened tool life. In extreme cases chatter vibrations may break the cutting tool and even damage the machine tool.

Common cutting tools comprise a tool body made from steel, and a cutting insert made from cemented carbide.

In order to reduce the above described problems, i.e. to suppress chatter vibrations, different solutions have been proposed. WO2017109771A1 disclose a cutting tool holder comprising a holder body and a weight assembly, comprising weight portions, located within a weight aperture. The weight portions are formed of a material denser than the material of the holder body.

JPH0453701A discloses a cutting tool according to the preamble of claim 1, namely a circular saw comprising a saw body metal substrate and brazed hard metal teeth. The circular saw comprises a through groove having a width of about 2 mm which is formed through the substrate side surface. A viscoelastic resin is injected into the groove in order to supress vibrations.

Although the cutting tool holder disclosed in WO2017109771A1 is claimed to improve vibration damping, the inventors have found that there is a need for an improved cutting tool.

### SUMMARY OF THE INVENTION

The inventors have found that the design of the above described cutting tool holder is increasingly difficult to design and/or manufacture as the width of the tool is smaller. In other words, due to geometrical limitations, especially in narrow and/or deep grooving and parting applications, especially when the width of the tool is 10 mm or below, it is difficult to design and/or manufacture such a tool. Further, such a tool having a high-density mass have disadvantages, such as e.g. higher power consumption when used in e.g. a cutting process where the cutting tool rotates, such as for a slot milling cutter. In other words, there is a benefit in providing a more light-weight cutting tool. Further, the inventors have found that the above described cutting tool is relatively expensive to manufacture because it comprises several elements including high density elements. Further, there is a need for a cutting tool having improved vibration reduction properties.

It is an object of the invention to reduce at least one of the above problems.

This is achieved by a cutting tool according to claim 1.

To overcome the obstacles mentioned above, a cutting tool has been developed which uses material from the tool body itself to create the effect of a tuned mass damper. The damper can be shaped by cutting out material from the original tool body. The reshaped blade will not have additional material nor complicated additional features.

The cutting tool is suitable for metal cutting and is a grooving blade. The cutting tool comprises a tool body which is preferably made from steel. The tool body comprises one or more insert seats for one or more cutting inserts. Said insert is removably clampable in the insert seat. The tool body comprises clamping means, such as e.g. in the form of one or more screws, a top clamp or an elastic clamping finger.

A recess is formed in the tool body.

The recess is spaced apart from the insert seat.

The tool body comprises vibration damping means, i.e. a vibration damping device or a vibration dampening member. In other words, the tool body comprises a device which reduces the risk of vibrations during cutting. The vibration damping means is spaced apart from the insert seat.

The vibration damping means comprises a cantilever member surrounded by the recess, except for the fixed end.

The cantilever member comprises a cantilever beam, i.e. a cantilever beam member, and an end mass, i.e. an end mass member. Formulated differently, the cantilever member comprises a stem portion and a head portion.

The cantilever member is can oscillate in relation to the surrounding parts of the tool body in order to counteract vibrations.

A cross section area of the cantilever member is preferably greater at a distance from the fixed end than at the fixed end. More precisely, a cross section area of the cantilever member is preferably greater at a mid-section of the cantilever beam than at a mid-section of the end mass, where said cross section areas are perpendicular to a longitudinal axis of the cantilever beam.

The center of mass of the cantilever member is not mid-way between the free end and the fixed end. Rather, a distance from the free end to the center of mass is shorter than a distance from the fixed end to the center of mass.

The cantilever member and the recess are arranged such that the cantilever member can oscillate to reduce vibration.

The cantilever member preferably has a constant width from the fixed end to the free end.

The cantilever beam preferably has a length of 0.5 - 30 mm, more preferably 1.0 - 20 mm, even more preferably 1.5 - 10 mm. The cantilever beam is preferably uniform or substantially uniform in cross sections. The cantilever beam preferably has a rectangular or square-shaped cross section. The cantilever beam is preferably rectangular cuboid shaped or cuboid shaped.

The end mass is preferably cylinder-shaped, preferably circular cylinder-shaped.

In other words, the cantilever member preferably comprises a solid rectangular cuboid and a solid cylinder, where one end of the rectangular cuboid is connected to the solid cylinder, and where an opposite end of the rectangular cuboid is connected to the tool body, i.e. said opposite end of the rectangular cuboid defines the fixed end of the cantilever member.

According to the invention, the tool body comprises a first side surface and an opposite second side surface, wherein the recess opens into the first and second side surfaces, wherein the cantilever member extends between the first and second side surfaces.

By such a cutting tool, the cutting tool can be manufactured in a more economical manner.

The cantilever member is included in the first and second side surfaces. The width of the cantilever member is equal to the distance between the first and second side surfaces. The recess is a through hole which extends between the first and second side surfaces. In other words, the recess is a through hole which opens into the first and second side surfaces. The contour or shape of the recess in a side view defines the contour or shape of the cantilever member in a side view. The first and second side surfaces are external surfaces, i.e. peripheral surfaces, of the tool body. The contour or shape of the recess in a side view preferably comprises two parallel straight portions connected by a circular arc. Said circular arc has a radius thereof which is greater than a distance between said two parallel straight portions. Said the angle of said circular arc is less than 360° and greater than 180°. Preferably, said angle is greater than 240°.

According to an embodiment, a distance between the first and second side surfaces is 0.5 - 20 mm, preferably 0.5 - 8 mm.

By such a cutting tool, a narrow groove can be machined.

The distance between the first and second side surfaces is a width.

The tool body may have a constant or substantially constant width.

The tool body comprises a blade portion, which comprises the first and second side surfaces, the insert seat, the recess and the vibration damping means.

A rear portion of the tool body is preferably wider than the blade portion. The rear portion preferably comprise a coupling portion, suitable to be connected to a machine interface.

The blade portion may have a constant width. Alternatively, the blade portion may comprise first and second side surfaces which are arc-shaped in a front view, and where the distance between first and second side surfaces varies.

The length of the blade portion defines the maximum grooving depth for the cutting tool.

According to an embodiment, the first and second side surfaces are parallel or substantially parallel.

By such a cutting tool, radial grooving can be performed in an efficient manner.

Formulated differently, the first and second side surfaces extend in parallel planes. In other words, a distance between the first and second side surfaces is constant.

According to the invention, the cutting tool comprises a cutting insert positioned in the insert seat, wherein the cutting insert comprises a cutting edge, wherein the cutting edge defines an insert width, wherein the insert width is greater than a distance between the first and second side surfaces.

By such a cutting tool, a grooving operation can be performed where the groove width is equal to the insert width.

The cutting insert preferably comprise a top surface, an opposite bottom surface and a front-end surface. The cutting edge connects the front-end surface and the top surface. The front-end surface is a clearance surface or relief surface. The top surface of the cutting insert preferably comprises chip breaking means, preferably in the form of one or more protrusions and/or depressions. The top surface is suitable to function as a rake surface.

The cutting insert is a grooving insert and preferably a parting insert. The cutting tool is suitable for machining a groove having a groove width thereof equal to the insert width. The tool body is preferably a parting blade suitable for radial parting and grooving in a radial grooving direction. The front-end surface of the cutting insert is preferably substantially, i.e. within 15°, facing the radial grooving direction.

The insert width is preferably 0.6 - 20 mm, even more preferably 1.0 - 8.0 mm. The insert width is preferably 2 - 40 % greater than the distance between the first and second side surfaces.

A distance from the bottom surface of the cutting insert to the cantilever member is shorter than a distance from the top surface of the cutting insert to the cantilever member.

A longitudinal axis of the cantilever beam is preferably parallel to or substantially parallel to the radial grooving direction.

According to the invention, the tool body comprises a front-end surface, wherein the insert seat opens into the front-end surface, wherein the cutting edge preferably extends partly or completely in a common plane, wherein a longitudinal axis of the cantilever beam extends in a plane parallel to or substantially parallel to said common plane.

By such a cutting tool, the risk of vibrations is further reduced.

The tool body comprises a front-end surface, i.e. a forward-facing surface, and an opposite rear surface. The rear surface may comprise a coupling portion, suitable for connection or coupling to a machine interface. The front-end surface is facing or substantially facing a radial grooving direction of the cutting tool.

The cutting edge extends partly or completely or substantially in a common plane. The cutting edge may preferably comprise a main cutting edge portion, two corner cutting edge portions, and two relief cutting edge portions or secondary cutting edge portions. Each of said corner cutting edge portions connects the main cutting edge portion and one relief cutting edge portion.

Said corner cutting edge portions may preferably be arc-shaped in a top view, and may preferably extend in said common plane.

The cutting edge may alternatively be shaped as a circular arc in a top view. The angle of said arc preferably is more than 180°, and the angle of the arc preferably is less than 300°.

A longitudinal axis of cantilever beam extends in a plane parallel to or substantially parallel to said common plane.

Said longitudinal axis preferably intersects the fixed end and the free end. Longitudinal axis is parallel to or substantially parallel to a radial grooving direction of the cutting tool.

According to an embodiment, the tool body and the cantilever member are made from the same material.

Such a cutting tool can be manufactured in a more economical manner.

The tool body including the cantilever beam and the end mass are made from the same material. The material is preferably steel. The cantilever beam and the end mass are permanently connected. The cantilever beam and the tool body are permanently connected. The tool body is preferably made from a single blank.

According to an embodiment, the recess and the cantilever member have corresponding or substantially corresponding shapes, wherein a gap width between the cantilever member and the surrounding portion of the tool body is constant or substantially constant.

By such a cutting tool, manufacturing costs can be reduced.

In a side view, the contour of the cantilever member corresponds to the contour of the recess. The recess defines the gap adjacent to the cantilever member. A gap width between the cantilever member and the surrounding portion of the tool body, made from the same material as the cantilever member, is constant or substantially constant.

According to an embodiment, the gap width is 0.2 - 5.0 mm, preferably 0.5 - 2.5 mm.

By such a cutting tool, the stability is further improved because the amount of removed material is kept to a minimum.

According to an embodiment, the vibration damping means comprises a kinetic energy absorbing element, wherein the kinetic energy absorbing element is positioned in the recess.

By such a cutting tool, the risk of vibrations is further reduced.

The kinetic energy absorbing element is positioned in at least a portion of the recess.

Preferably, the kinetic energy absorbing element borders to at least a portion of the end mass.

The recess may be completely or substantially filled with the kinetic energy absorbing element.

According to an embodiment, the kinetic energy absorbing element comprises a polymer, an elastomer or a rubber.

By such a cutting tool, the risk of vibrations is further reduced.

Preferably, the kinetic energy absorbing element comprises a polymer, preferably silicone. Preferably, the recess surrounding the end mass is at least partly filled with the kinetic energy absorbing element.

According to an embodiment, the kinetic energy absorbing element has a hardness of 40-80, preferably 35-65, according to the ASTM D2240 type A scale.

By such a cutting tool, the risk of vibrations is even further reduced.

Said hardness is known as Shore hardness. According to the ASTM D2240-00 testing standard type A, the kinetic energy absorbing element thus has a hardness of 40-80, preferably 35-65.

According to an embodiment, a distance from the free end to a center of mass of the cantilever member is shorter than a distance from the fixed end to the center of mass of the cantilever member.

By such a cutting tool, the risk of vibrations is further reduced.

Preferably, the distance from the free end to the center of mass of the cantilever member is 1 - 75 %, even more preferably 20 - 50 % of a distance from the fixed end to the center of mass of the cantilever member.

According to the invention, the cutting tool is a grooving blade, wherein the grooving blade comprises a front-end surface, a top surface and a bottom surface, wherein the insert seat opens into the front-end surface, wherein the top and bottom surfaces are parallel or substantially parallel, wherein the cantilever beam is arranged parallel or substantially parallel to the top and bottom surfaces, wherein a distance from the front-end surface to the free end is shorter than a distance from the front-end surface to the fixed end.

The grooving blade, or parting blade, is preferably made from steel.

The width of the grooving blade is preferably constant. The top and bottom surfaces are preferably clamping surfaces, suitable for clamping the grooving blade in a tool adaptor in the form of a tool block.

The bottom surface is preferably not perpendicular to the first and second side surfaces. The bottom surface is preferably V-shaped, i.e. tapered. The bottom surface preferably comprises a first surface and a second surface, wherein the first and second surface forms an angle of 100 - 170°, even more preferably 110 - 150°, in relation to each other. Preferably, a height of the grooving blade defined as a distance between the top and bottom surfaces, is greater mid-way between the first and second side surface than at or along the first or second side surface.

The top surface is preferably arranged in a corresponding manner as the bottom surface.

The cantilever member is spaced apart from the front-end surface, the top surface and the bottom surface.

A rear surface is opposite to the front-end surface.

The grooving blade is preferably elongated. Preferably, a distance from the rear surface to the front-end surface is greater than, more preferably 2 - 10 times greater than, even more preferably 3 - 8 times greater than a distance between the top and bottom surfaces.

A longitudinal axis of the cantilever beam is parallel to or substantially parallel to the top and bottom surfaces, seen in a side view.

Preferably, the insert seat separates the top surface and the front-end surface.

Preferably, a distance from the front-end surface to the recess is 1 - 20 mm, even more preferably 2-10 mm.

Preferably, a distance from the bottom surface to the recess is 1 - 20 mm, even more preferably 2-10 mm.

A distance from the front-end surface to the free end is shorter than a distance from the front-end surface to the fixed end. The recess and the cantilever member are at least partly located between the insert seat and the bottom surface of the cutting tool.

According to an embodiment, a distance from the bottom surface to the cantilever member is shorter than a distance from the top surface to the cantilever member, wherein a distance from the insert seat to the top surface is shorter than a distance from the insert seat to the bottom surface.

By such a cutting tool, the risk of vibrations is further reduced.

According to an embodiment not according to the invention, the cutting tool is a slot milling cutter, wherein the slot milling cutter is rotatable around a rotational axis, wherein the cantilever beam is arranged radially or substantially radially with regards to the rotational axis, wherein the fixed end is facing the rotational axis.

The cantilever member is spaced apart from the rotational axis. A distance from the rotational axis to the free end is greater than a distance from the rotational axis to the fixed end. A longitudinal axis of cantilever beam intersects or substantially intersects the rotational axis of the slot milling cutter. In other words, an imaginary extension of the cantilever beam intersects or substantially intersects the rotational axis of the slot milling cutter.

The slot milling cutter preferably comprises 2 - 30 insert seats. Preferably, the slot milling cutter comprise 2 - 30 vibration damping means. Preferably, the number of vibration damping means is equal to or substantially equal to the number of insert seats.

According to an embodiment, a method to reduce vibrations during a metal cutting operation, comprising the steps of:
providing a metal work piece,
providing an above described cutting tool according to the invention, rotating the metal work piece around a rotational axis thereof,
arranging the cutting tool such that the cantilever beam is arranged radially with regards to the rotational axis, and
cutting the metal work piece by moving the cutting tool towards the rotational axis.

The method is a metal cutting method, more specifically a turning method. A CNC-lathe is preferably provided. The CNC-lathe preferably comprises a machine interface. The CNC-lathe preferably comprises a rotatable spindle comprising clamping means. A metal work piece is provided. The metal work piece is preferably rotationally symmetrical or substantially rotationally symmetrical. The metal work piece is preferably rotatable by means of the rotatable spindle. A cutting tool is provided. The cutting tool is preferably connected to the machine interface.

The metal work piece is rotated around a rotational axis thereof. The cutting tool is arranged or oriented such that the cantilever beam is arranged radially with regards to the rotational axis.

The method comprises the step of cutting the metal work piece by moving the cutting tool in a radial grooving direction towards the rotational axis.

The longitudinal axis of cantilever beam is arranged parallel to or substantially parallel to the radial grooving direction.

### DESCRIPTION OF THE DRAWINGS

The present invention will now be explained in more detail by a description of embodiments of the invention and by reference to the accompanying drawings.
- Fig. 1: is a perspective view of a tool adaptor and a cutting tool according to a first embodiment
- Fig. 2: is a side view of the tool adaptor and the cutting tool in Fig. 1 and a metal work piece
- Fig. 3: is a side view of the cutting tool in Fig. 1
- Fig. 4: is a top view of the cutting tool in Fig. 1
- Fig. 5: is a perspective view of a tool adaptor and a cutting tool according to a second which is not according to the invention
- Fig. 6: is a side view of the cutting tool in Fig. 5
- Fig. 7: is a front view of the cutting tool in Fig. 5
- Fig. 8: is a perspective view of a cutting tool according to a third embodiment
- Fig. 9: is a perspective view of a cutting tool according to a fourth embodiment
- Fig. 10: is a front view of the cutting tool in Fig. 9
- Fig. 11: is a side view of the cutting tool in Fig. 9
- Fig. 12: is a perspective view of a tool adaptor and a cutting tool according to a fifth embodiment which is not according to the invention
- Fig. 13: is a side view of the cutting tool in Fig. 12
- Fig. 14: is a magnified view of the bottom right portion of the cutting tool in Fig. 3 showing a first example of vibration damping means
- Fig. 15: is a cross-sectional view along line A-A of Fig. 14
- Fig. 16: is a cross-sectional view along line B-B of Fig. 14
- Fig. 17: is a side view of a second example of vibration damping means
- Fig. 18: is a side view of a third example of vibration damping means
- Fig. 19: is a side view of a fourth example of vibration damping means
- Fig. 20: is a side view of a cutting tool according to a sixth embodiment which is not according to the invention
- Fig. 21: is a magnified view of the bottom right portion of the cutting tool in Fig. 20 showing a fifth example of vibration damping means
- Fig. 22: is a cross-sectional view along line A-A of Fig. 21
- Fig. 23: is a cross-sectional view along line B-B of Fig. 21

### DETAILED DESCRIPTION OF EMBODIMENTS OF THE INVENTION

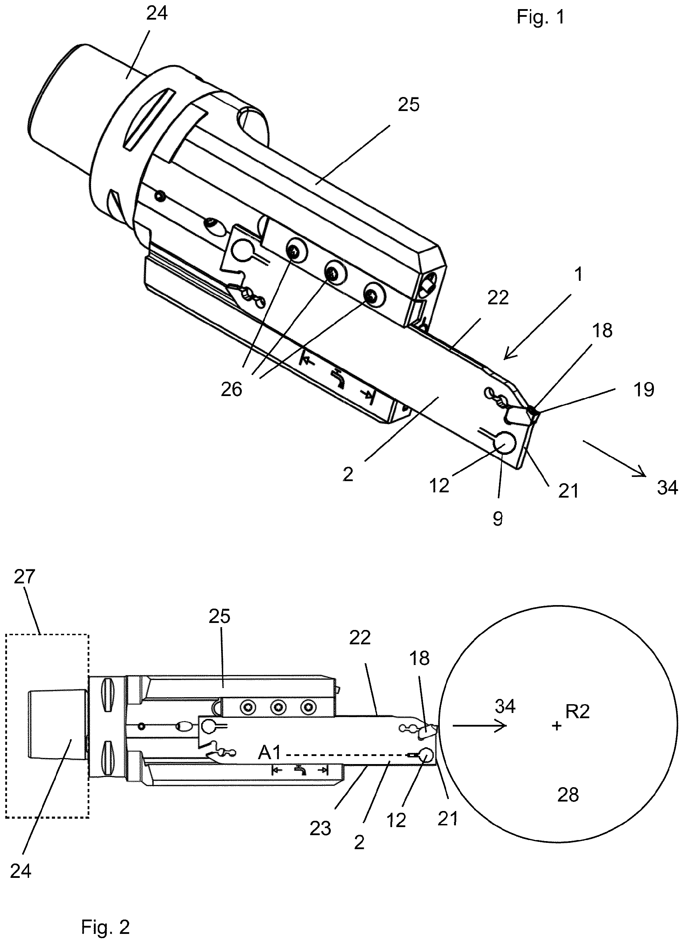

Reference is made to Figs. 1-4 which show a cutting tool 1 according to a first embodiment.

The cutting tool 1 comprises a tool body 2 in the form of an elongated parting and grooving blade and a cutting insert 18. The tool body 2 comprise two diagonally opposite insert seats 11. The cutting insert 18 is mounted in one insert seat 11.

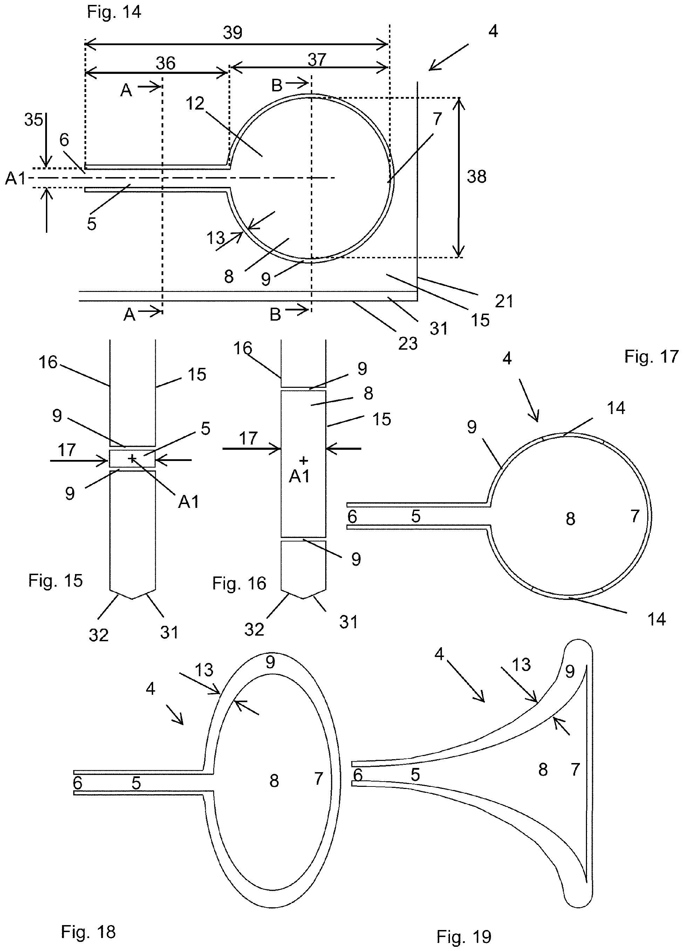

Two recesses 9 is formed in the tool body 2. One recess 9 is described more in detail in Figs. 14-16. The tool body 2 comprises vibration damping means 4, where the vibration damping means 4 comprises a cantilever member 12 adjacent to the recess 9.

The cutting insert 3 comprises a top surface 29, an opposite bottom surface 30 and a front-end surface 40. A cutting edge 19 connects the front-end surface 40 and the top surface 29. The cutting edge 19 defines an insert width 20. The front-end surface is a clearance surface or relief surface. The top surface 29 of the cutting insert comprises chip breaking means in the form of one or more protrusions and/or depressions. The top surface 29 is suitable to function as a rake surface. The top and bottom surfaces 29, 30 comprises seating surfaces for contact with seating surfaces formed in the insert seat 11.

The tool body 2 comprises a front-end surface 21, an opposite rear surface 33, a top surface 22, an opposite bottom surface 23, a first side surface 15 and an opposite second side surface 16. The tool body 2 is elongated, i.e. a distance from the front-end surface 21 to the rear surface is greater than a distance from the top surface 22 to the bottom surface 23.

The bottom surface is V-shaped, i.e. tapered. The bottom surface 23 comprises a first surface 31 and a second surface 32, wherein the first and second surface forms an angle of 100 - 170°, even more preferably 110 - 150°, in relation to each other. A height of the grooving blade defined as a distance between the top and bottom surfaces 22, 23, is greater mid-way between the first and second side surface 15, 16 than at or along the first or second side surface 15, 16. The top surface 22 is arranged in a corresponding manner as the bottom surface 23.

The insert seat 11 opens into the front-end surface 21.

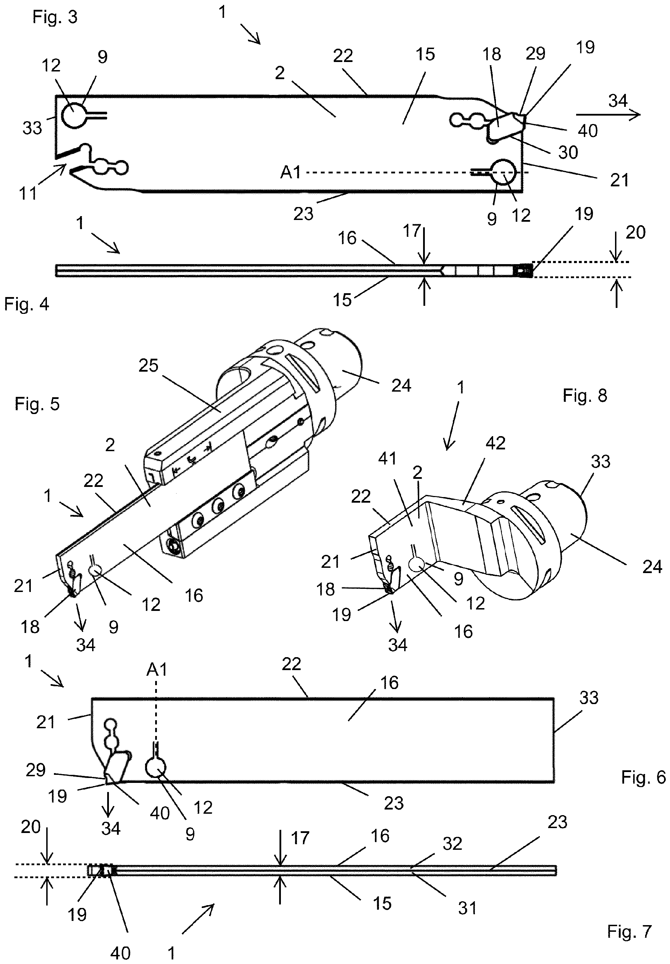

A longitudinal axis A1 of the cantilever beam is parallel to or substantially parallel to the top and bottom surfaces 22, 23 seen in a side view as seen in e.g. Fig. 3.

A distance 17 between the first and second side surfaces 15, 16 is constant and smaller than the insert width 20.

As seen in Figs. 1 and 2, the cutting tool 1 is mounted in a tool adaptor 25 by clamping means 26 which include screws. The tool adaptor comprises a coupling portion 24 suitable for connection to a machine interface 27 of a machine tool (not shown), such as e.g. a CNC-lathe.

Fig. 2 show an example of how the cutting tool 1 is used when machining a metal work piece 28 in a parting-off or radial grooving operation. The metal work piece 28 rotates around a rotational axis R2 thereof. The direction of rotation of the metal work piece 28 is counter clock-wise in Fig. 2. The cutting tool 1 is brought or moved towards the metal work piece 28 in a radial grooving direction 34. More precisely, the cutting edge 19 of the cutting insert 1 is linearly towards the rotational axis R2 of the metal work piece 28. The longitudinal axis A1 of the cantilever beam is parallel to or substantially parallel to the radial grooving direction 34.

In an alternative embodiment (not shown), the metal work piece 28 may be still while the cutting tool 1 rotates around the rotational axis R2 of the metal work piece 28.

Reference is now made to Figs. 5-7 which show a cutting tool 1 according to a second embodiment which is not according to the invention. The cutting tool 1 comprises a tool body 2 and a cutting insert 18. The cutting insert 18 is identical to the cutting insert 18 in Figs. 1-4. The cutting tool 1 mounted in a tool adaptor 25, which tool adaptor 25 is identical to the tool adaptor in Figs. 1 and 2. The tool body 2 differs from the tool body 2 shown in Figs. 1-4 in that the insert seat is oriented such that the front end 40 of cutting insert 18 and the bottom surface 23 is facing the same direction or substantially the same direction. The longitudinal axis A1 of the cantilever beam is perpendicular to the top and bottom surfaces 22, 23.

Reference is now made to Fig. 8 which show a cutting tool 1 according to a third embodiment. The cutting tool 1 differs from the cutting tool shown in Figs. 5-7 in that the tool body 2 comprises a blade portion 41, or a front portion, and a rear portion 42. The blade portion 41 comprises the first side surface and the second side surface 16. A distance between the first and second side surfaces is constant and smaller than the insert width. The blade portion 41 comprises the cantilever member 12. The rear portion 42 comprises a coupling portion 24.

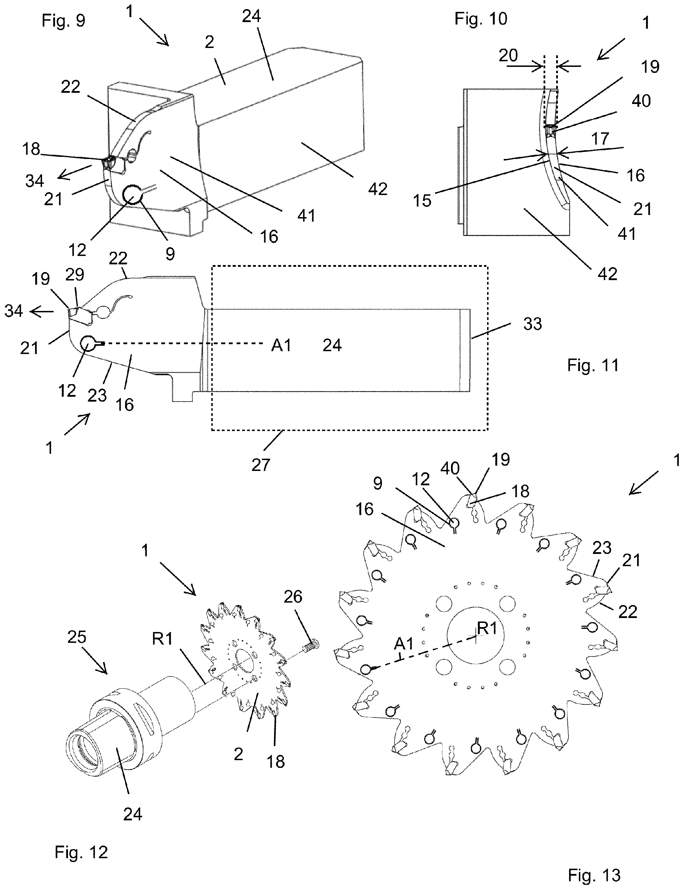

Reference is now made to Figs. 9-11 which show a cutting tool 1 according to a fourth embodiment. The tool body 2 comprises a blade portion 41, or a front portion, and a rear portion 42. The blade portion 41 comprises the first and second side surfaces 15, 16. A distance 17 between the first and second side surfaces 15, 16 is smaller than the insert width 20. The first and second side surfaces 15, 16 is curved or arc-shaped in a front view, as seen in Fig. 10.

Reference is now made to Figs. 12 and 13 which show a cutting tool 1 according to a fifth embodiment which is not according to the invention. The cutting tool 1 is a slot milling cutter or a grooving milling cutter, which is rotatable around a rotational axis R1 thereof. The cutting tool 1 is suitable for machining a groove in a metal work piece (not shown).

As seen in Fig. 12, the cutting tool 1 is mountable in a tool adaptor 25 by clamping means 26 which include screws. The tool adaptor 25 comprises a coupling portion 24 suitable for connection to a machine interface 27 of a machine tool (not shown), such as e.g. a machining center or a multi-task machine, or any CNC machine having capacity to rotate a milling tool.

As seen in Fig. 13, the cantilever member 12 is arranged such that the cantilever beam is arranged radially or substantially radially with regards to the rotational axis R1, such that a longitudinal axis A1 of cantilever beam intersects or substantially intersects the rotational axis A1 of the slot milling cutter. The cantilever member 12 is spaced apart from the rotational axis R1.

The slot milling cutter 1 comprises 15 insert seats evenly or substantially evenly arranged around the rotational axis R1 when seen in a side view as in Fig. 13. Exactly one cutting insert 18 is positioned in each insert seat. The number of vibration damping means is equal to the number of insert seats.

The slot milling cutter 1 comprises 15 cutting inserts 18 and 15 insert seats. However, the number of cutting inserts may be smaller or larger.

Reference is now made to Fig. 14-16 which more in detail show the first example of vibration damping means found in the bottom right portion of the cutting tool in Fig. 3. Fig. 15 is a cross-sectional view along line A-A of Fig. 14. Fig. 16 is a cross-sectional view along line B-B of Fig. 14. The vibration damping means 4 comprise a cantilever member 12.

The cantilever member 12 is adjacent to the recess 9. The recess 9 opens into the first side surface 15, and into the opposite second side surface 16. The cantilever member 12 comprises a rectangular cuboid shaped cantilever beam 5 and a cylinder-shaped end mass 8. The cantilever member 12 extends between a fixed end 6 and a free end 7. The fixed end 6 is permanently connected to the tool body 2. The cantilever beam 5 extends from the fixed end 6. The end mass 8 extends from the free end 7.

A longitudinal axis A1 or central axis of cantilever beam 5 intersects the fixed end 6 and the free end 7. The longitudinal axis A1 is parallel to the bottom surface 23 of the tool body 23. The longitudinal axis A1 is perpendicular to the front-end surface 21.

A cross section area of the cantilever member 12 is greater at a mid-section of the cantilever beam 5, seen in Fig. 15, than at a mid-section of the end mass 8, as seen in Fig. 16.

A distance from the front-end surface 21 to the free end 7 of the cantilever member 12 is shorter than a distance from the front-end surface 21 to the fixed end 6 of the cantilever member 12. A gap width 13, or recess width, between the cantilever member 12 and the surrounding portion of the tool body 2, made from the same material as the cantilever member 12, is constant or substantially constant. A height 35 of cantilever beam 5 is constant and is measured perpendicular to the longitudinal axis A1 of the cantilever beam 5, as seen in Fig. 14. A length 36 of the cantilever beam 5 and a length 37 of the end mass 8 are both measured along the longitudinal axis A1 of the cantilever beam 5. A height 38 of the end mass 8 is measured perpendicular to the longitudinal axis A1 of the cantilever beam 5, as seen in Fig. 14. A length 39 of the cantilever member 12 is equal to the combined lengths 36, 37 of the cantilever beam 5 and the end mass 8. A width of the cantilever member 12 is constant and equal to the distance 17 between the first and second side surfaces 15, 16.

Preferably a distance from the recess 9 to the front-end surface 21 is 2-6 mm.

Reference is now made to now made to Fig. 17, showing a second example of vibration damping means 4. The only difference compared to the first example of vibration damping means is that a kinetic energy absorbing element 14 is positioned in a portion of the recess 9. More precisely, the recess 9 surrounding the end mass 8 is at least partly filled with the kinetic energy absorbing element 14. The kinetic energy absorbing element 14 is silicone. The kinetic energy absorbing element extends between or substantially between the first and second side surfaces.

Reference is now made to now made to Fig. 18, showing a third example of vibration damping means 4. The main differences compared to the first example of vibration damping means is that gap width 13 varies, and that the shape of the recess 9 is such that the end mass 8 is oval shaped in a side view.

Reference is now made to now made to Fig. 19, showing a fourth example of vibration damping means 4. The main differences compared to the first example of vibration damping means is that gap width 13 varies, and that the shape of the recess 9 differs. More specifically, the height 35 of cantilever beam 5 is increasing at increasing distance from the fixed end 6, and the cantilever beam is seamlessly transitioned into the end mass 8.

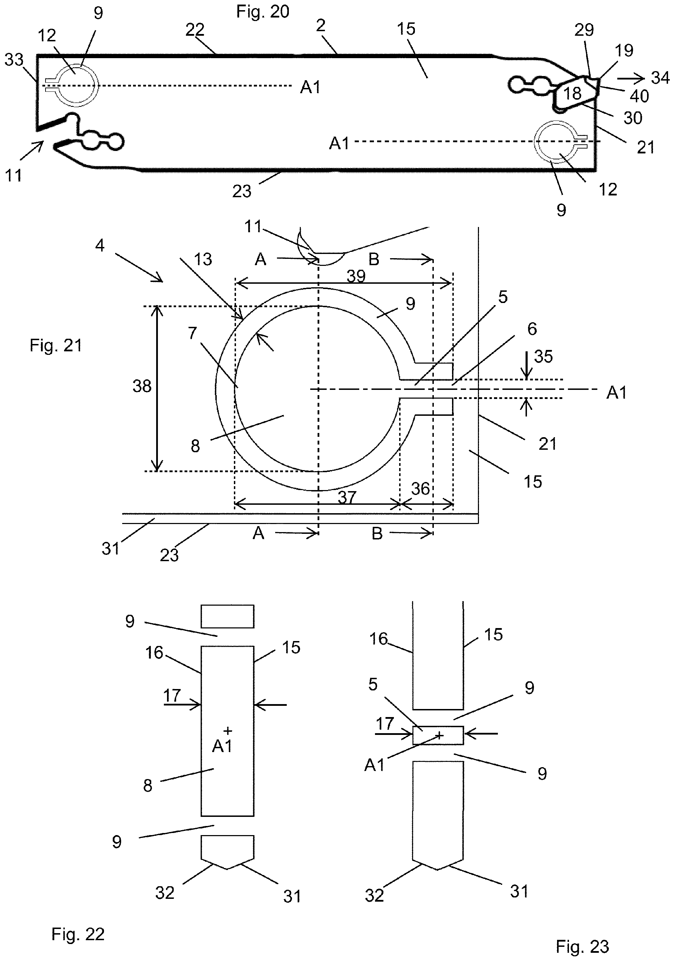

Reference is now made to Figs. 20 which show a sixth embodiment of a cutting tool which is not according to the invention, comprising a fifth example of vibration damping means 4, shown in detail in Figs. 21 - 23. The main differences compared to the first example of vibration damping means is that the orientation of the cantilever member 12 is rotated 180° in a side view, as seen in Fig. 22. A distance from the front-end surface 21 to the free end 7 of the cantilever member 12 is greater than a distance from the front-end surface 21 to the fixed end 6 of the cantilever member 12. Further differences are that a length 36 of the cantilever beam 5 is shorter than a length 37 of the end mass 8, and that the gap width 13 is greater.

The longitudinal axis A1 of cantilever beam 12 is parallel to the top and bottom surfaces 22, 23 of the tool body 2. The recess is preferably positioned such that distances from the recess 9 to the bottom surface 23, the front-end surface 21 and the insert seat 11, respectively, are substantially equal, i.e. none of said distances is more than 100 %, preferably 50 %, greater than any other of said distances. This can be understood from e.g. Fig. 21, where said distances are substantially equal. Preferably, a distance from the recess 9 to the bottom surface is 2-6 mm. Preferably a distance from the recess 9 to the front-end surface 21 is 2-6 mm. Preferably, a distance from the recess 9 to the insert seat 11 is 2-6 mm.

All the above examples of vibration damping means may include a kinetic energy absorbing element 14, preferably comprising silicone, positioned in at least a portion of the recess 9, preferably such that the recess 9 surrounding the end mass 8 is at least partly filled with the kinetic energy absorbing element 14.

All the above examples of vibration damping means may include a high density material, i.e. of higher density than steel, preferably cemented carbide, connected to the end mass.

Any of the above described vibration dambing means can be utilized for any of the above described cutting tools.

The cutting insert shown in the above embodiment may have other shapes, such as substantially L-shaped or triangular in a side view. The clamping of the insert can be through spring clamp, i.e. through the inherent elasticity of a clamping jaw, insert screw, top clamp, or any other suitable clamping means.

The recess in the above described cutting tools may be formed through any suitable metal removal operation, such as milling, drilling, electrical discharge machining (EDM) or laser.

Other examples of cutting tools (not shown) may comprise a recess in the form of a cavity, which is spaced apart from the first and second side surfaces. Such cutting tools may preferably be formed completely or partially through additive manufacturing.

## Claims

1. A cutting tool (1) for metal cutting, comprising a tool body (2),
wherein a recess (9) is formed in the tool body (2),
wherein the tool body (2) comprises vibration damping means (4), the vibration damping means (4) comprising a cantilever member (12),
in that the cantilever member (12) is adjacent to the recess (9),
in that the cantilever member (12) comprises a cantilever beam (5) and an end mass (8),
in that the cantilever member (12) extends between a fixed end (6) and a free end (7),
in that the fixed end (6) is permanently connected to the tool body (2),
in that the cantilever beam (5) extends from the fixed end (6), and
in that the end mass (8) extends from the free end (7),
wherein the tool body (2) comprises a first side surface (15) and an opposite second side surface (16),
wherein the recess (9) opens into the first and second side surfaces (15, 16),
wherein the cantilever member (12) extends between the first and second side surfaces (15, 16), wherein
the tool body (2) comprises an insert seat (11) and a cutting insert (18) positioned in the insert seat (11),
wherein the cutting insert (18) comprises a cutting edge (19),
wherein the cutting edge (19) defines an insert width (20),
wherein the insert width (20) is greater than a distance (17) between the first and second side surfaces (15, 16), **characterised in that**
the cutting tool (1) is a grooving blade,
wherein the grooving blade comprises a front-end surface (21), a top surface (22) and a bottom surface (23),
wherein the insert seat (11) opens into the front-end surface (21),
wherein the top and bottom surfaces (22, 23) are parallel or substantially parallel,
wherein the cantilever beam (5) is arranged parallel or substantially parallel to the top and bottom surfaces (22, 23),
wherein a distance from the front-end surface (21) to the free end (7) is shorter than a distance from the front-end surface (21) to the fixed end (6).

2. A cutting tool (1) according to claim 1,
wherein a distance (17) between the first and second side surfaces (15, 16) is 0.5 - 20 mm, preferably 0.5 - 8 mm.

3. A cutting tool (1) according to claim 1 or 2,
wherein the first and second side surfaces (15, 16) are parallel or substantially parallel.

4. A cutting tool (1) according to any of the preceding claims,
wherein the cutting edge (19) extends partly or completely in a common plane,
wherein a longitudinal axis (A1) of cantilever beam (5) extends in a plane parallel to or substantially parallel to said common plane.

5. A cutting tool (1) according to any of the preceding claims,
wherein the tool body (2) and the cantilever member (12) are made from the same material.

6. A cutting tool (1) according to any of the preceding claims,
wherein the recess (9) and the cantilever member (12) have corresponding or substantially corresponding shapes,
wherein a gap width (13) between the cantilever member (12) and the surrounding portion of the tool body (2) is constant or substantially constant.

7. A cutting tool (1) according to claim 6, wherein the gap width (13) is 0.2 - 5.0 mm, preferably 0.5 - 2.5 mm.

8. A cutting tool (1) according to any of the preceding claims, wherein the vibration damping means (4) comprises a kinetic energy absorbing element (14), wherein the kinetic energy absorbing element (14) is positioned in the recess (9).

9. A cutting tool (1) according to claim 8, wherein the kinetic energy absorbing element (14) comprises a polymer, an elastomer or a rubber.

10. A cutting tool (1) according to claim 8 or 9, wherein the kinetic energy absorbing element (14) has a hardness of 40-80, preferably 35-65, according to the ASTM D2240 type A scale.

11. A cutting tool (1) according to any of the preceding claims, wherein a distance from the free end (7) to a center of mass of the cantilever member (12) is shorter than a distance from the fixed end (6) to the center of mass of the cantilever member (12).

12. A cutting tool (1) according to any of the preceding claims,
wherein a distance from the bottom surface (23) to the cantilever member (12) is shorter than a distance from the top surface (22) to the cantilever member (12),
wherein a distance from the insert seat (11) to the top surface (22) is shorter than a distance from the insert seat (11) to the bottom surface (23).

13. A method to reduce vibrations during a metal cutting operation, comprising the steps of:
providing a metal work piece (28),
providing a cutting tool (1) according to any of the preceding claims, rotating the metal work piece (28) around a rotational axis (R2) thereof,
arranging the cutting tool (1) such that the cantilever beam (5) is arranged radially with regards to the rotational axis (R2), and
cutting the metal work piece (28) by moving the cutting tool (1) towards the rotational axis (R2).

## Patentansprüche

1. Schneidwerkzeug (1) für die Metallbearbeitung, mit einem Werkzeugkörper (2), wobei in dem Werkzeugkörper (2) eine Ausnehmung (9) ausgebildet ist,
wobei der Werkzeugkörper (2) eine Vibrationsdämpfungseinrichtung (4) aufweist,
wobei die Vibrationsdämpfungseinrichtung (4) ein Auskragungselement (12) aufweist,
wobei das Auskragungselement (12) an die Ausnehmung (9) angrenzend angeordnet ist,
wobei das Auskragungselement (12) einen Auskragungsarm (5) und eine Endmasse (8) aufweist,
wobei sich das Auskragungselement (12) zwischen einem fixierten Ende (6) und einem freien Ende (7) erstreckt,
wobei das fixierte Ende (6) mit dem Werkzeugkörper (2) dauerhaft verbunden ist,
wobei sich der Auskragungsarm (5) von dem fixierten Ende (6) aus erstreckt, und
wobei sich die Endmasse (8) von dem freien Ende (7) aus erstreckt,
wobei der Werkzeugkörper (2) eine erste seitliche Fläche (15) und eine gegenüberliegende zweite seitliche Fläche (16) aufweist,
wobei die Ausnehmung (9) in die erste und zweite seitliche Fläche (15, 16) mündet,
wobei sich das Auskragungselement (12) zwischen der ersten und der zweiten Seitenfläche (15, 16) erstreckt, wobei der Werkzeugkörper (2) einen Einsatzsitz (11) und einen Schneideinsatz (18) enthält, der in dem Einsatzsitz (11) angeordnet ist,
wobei der Schneideinsatz (18) eine Schneidkante (19) aufweist,
wobei die Schneidkante (19) eine Einsatzbreite (20) definiert,
wobei die Einsatzbreite (20) größer ist als ein Abstand (17) zwischen der ersten und der zweiten seitlichen Fläche (15, 16), **dadurch gekennzeichnet, dass**
das Schneidwerkzeug (1) ein Einstechschneider ist,
wobei der Einstechschneider eine vordere Fläche (21), eine obere Fläche (22) und eine untere Fläche (23) aufweist,
wobei der Einsatzsitz (11) sich in die vordere Fläche (21) öffnet,
wobei die obere und die untere Fläche (22, 23) parallel oder im Wesentlichen parallel sind,
wobei der Auskragungsarm (5) parallel oder im Wesentlichen parallel zu den Ober- und Unterseitenflächen (22, 23) angeordnet ist,
wobei ein Abstand von der vorderen Fläche (21) zum freien Ende (7) kürzer ist als ein Abstand von der vorderen Fläche (21) zum fixierten Ende (6).

2. Schneidwerkzeug (1) nach Anspruch 1,
wobei ein Abstand (17) zwischen der ersten und der zweiten seitlichen Fläche (15, 16) 0,5 bis 20 mm, vorzugsweise 0,5 bis 8 mm, beträgt.

3. Schneidwerkzeug (1) nach Anspruch 1 oder 2,
wobei die erste und die zweite seitliche Fläche (15, 16) parallel oder im Wesentlichen parallel sind.

4. Schneidwerkzeug (1) nach einem der vorangehenden Ansprüche,
wobei die Schneidkante (19) teilweise oder vollständig in einer einfachen Ebene verläuft,
wobei sich eine Längsachse (A1) des Auskragungsarms (5) in einer Ebene parallel oder im wesentlichen parallel zu der einfachen Ebene erstreckt.

5. Schneidwerkzeug (1) nach einem der vorangehenden Ansprüche,
wobei der Werkzeugkörper (2) und das Auskragungselement (12) aus demselben Material hergestellt sind.

6. Schneidwerkzeug (1) nach einem der vorangehenden Ansprüche,
wobei die Ausnehmung (9) und das Auskragungselement (12) entsprechende oder im Wesentlichen entsprechende Formen aufweisen,
wobei eine Spaltbreite (13) zwischen dem Auskragungselement (12) und dem umgebenden Abschnitt des Werkzeugkörpers (2) konstant oder im Wesentlichen konstant ist.

7. Schneidwerkzeug (1) nach Anspruch 6,
wobei die Spaltbreite (13) 0,2 bis 5,0 mm, vorzugsweise 0,5 bis 2,5 mm, beträgt.

8. Schneidwerkzeug (1) nach einem der vorangehenden Ansprüche,
wobei die Vibrationsdämpfungseinrichtung (4) ein kinetische Energie absorbierendes Element (14) aufweist, wobei das kinetische Energie absorbierende Element (14) in der Ausnehmung (9) angeordnet ist.

9. Schneidwerkzeug (1) nach Anspruch 8,
wobei das kinetische Energie absorbierende Element (14) ein Polymer, ein Elastomer oder einen Gummi aufweist.

10. Schneidwerkzeug (1) nach Anspruch 8 oder 9,
wobei das kinetische Energie absorbierende Element (14) eine Härte von 40 bis 80, vorzugsweise 35 bis 65, gemäß der ASTM D2240 Typ A Skala aufweist.

11. Schneidwerkzeug (1) nach einem der vorangehenden Ansprüche,
wobei ein Abstand von dem freien Ende (7) zu einem Massenschwerpunkt des Auskragungselements (12) kürzer ist als ein Abstand von dem fixierten Ende (6) zu dem Massenschwerpunkt des Auskragungselements (12).

12. Schneidwerkzeug (1) nach einem der vorangehenden Ansprüche,
wobei ein Abstand von der unteren Fläche (23) zu dem Auskragungselement (12) kürzer ist als ein Abstand von der oberen Fläche (22) zu dem Auskragungselement (12),
wobei ein Abstand von dem Einsatzsitz (11) zu der oberen Fläche (22) kürzer ist als ein Abstand von dem Einsatzsitz (11) zu der unteren Fläche (23).

13. Verfahren zur Verringerung von Vibrationen während eines Metallschneidevorgangs, das die folgenden Schritte aufweist:
Bereitstellen eines Metallwerkstücks (28),
Bereitstellen eines Schneidwerkzeugs (1) nach einem der vorangehenden Ansprüche,
Drehen des Metallwerkstücks (28) um eine Drehachse (R2) desselben,
Anordnen des Schneidwerkzeugs (1) derart, dass der Auskragungsarm (5) radial zur Drehachse (R2) angeordnet ist, und
Schneiden des Metallwerkstücks (28) durch Bewegen des Schneidwerkzeugs (1) in Richtung der Rotationsachse (R2).

## Revendications

1. Outil de coupe (1) pour une découpe de métal, comprenant un corps d'outil (2), où un évidement (9) est ménagé dans le corps d'outil (2),
où le corps d'outil (2) comprend un moyen d'amortissement de vibrations (4), le moyen d'amortissement de vibrations (4) comprenant un élément en porte-à-faux (12),
où l'élément en porte-à-faux (12) est adjacent à l'évidement (9),
où l'élément en porte-à-faux (12) comprend une tige en porte-à-faux (5) et un poids d'extrémité (8),
où l'élément en porte-à-faux (12) s'étend entre une extrémité fixée (6) et une extrémité libre (7),
où l'extrémité fixée (6) est reliée en permanence au corps d'outil (2),
où la tige en porte-à-faux (5) s'étend depuis l'extrémité fixée (6), et
où le poids d'extrémité (8) s'étend depuis l'extrémité libre (7),
où le corps d'outil (2) comprend une première surface latérale (15) et une seconde surface latérale opposée (16),
où l'évidement (9) s'ouvre dans les première et seconde surfaces latérales (15, 16),
où l'élément en porte-à-faux (12) s'étend entre les première et seconde surfaces latérales (15, 16), où le corps d'outil (2) comprend un siège de plaquette (11) et une plaquette de coupe (18) positionnée dans le siège de plaquette (11),
où la plaquette de coupe (18) comprend une arête de coupe (19),
où l'arête de coupe (19) définit une largeur de plaquette (20),
où la largeur de plaquette (20) est supérieure à une distance (17) entre les première et seconde surfaces latérales (15, 16), **caractérisé en ce que** l'outil de coupe (1) est une lame à rainurer, où la lame à rainurer comprend une surface d'extrémité avant (21), une surface supérieure (22) et une surface inférieure (23),
où le siège de plaquette (11) s'ouvre dans la surface d'extrémité avant (21),
où les surfaces supérieure et inférieure (22, 23) sont parallèles ou sensiblement parallèles,
où la tige en porte-à-faux (5) est agencée parallèle ou sensiblement parallèle aux surfaces supérieure et inférieure (22, 23),
où une distance entre la surface d'extrémité avant (21) et l'extrémité libre (7) est plus courte qu'une distance entre la surface d'extrémité avant (21) et l'extrémité fixée (6).

2. Outil de coupe (1) selon la revendication 1,
où une distance (17) entre les première et seconde surfaces latérales (15, 16) va de 0,5 à 20 mm, de préférence de 0,5 à 8 mm.

3. Outil de coupe (1) selon la revendication 1 ou 2,
où les première et seconde surfaces latérales (15, 16) sont parallèles ou sensiblement parallèles.

4. Outil de coupe (1) selon l'une quelconque des revendications précédentes,
où l'arête de coupe (19) s'étend en partie ou complètement dans un plan commun,
où un axe longitudinal (A1) de la tige en porte-à-faux (5) s'étend dans un plan parallèle ou sensiblement parallèle audit plan commun.

5. Outil de coupe (1) selon l'une quelconque des revendications précédentes,
où le corps d'outil (2) et l'élément en porte-à-faux (12) sont constitués du même matériau.

6. Outil de coupe (1) selon l'une quelconque des revendications précédentes,
où l'évidement (9) et l' élément en porte-à-faux (12) ont des formes correspondantes ou sensiblement correspondantes,
où une largeur d'intervalle (13) entre l'élément en porte-à-faux (12) et la partie avoisinante du corps d'outil (2) est constante ou sensiblement constante.

7. Outil de coupe (1) selon la revendication 6,
où la largeur d'intervalle (13) va de 0,2 à 5,0 mm, de préférence de 0,5 à 2,5 mm.

8. Outil de coupe (1) selon l'une quelconque des revendications précédentes,
où le moyen d'amortissement de vibrations (4) comprend un élément d'absorption d'énergie cinétique (14), où l'élément d'absorption d'énergie cinétique (14) est positionné dans l'évidement (9).

9. Outil de coupe (1) selon la revendication 8,
où l'élément d'absorption d'énergie cinétique (14) comprend un polymère, un élastomère ou un caoutchouc.

10. Outil de coupe (1) selon la revendication 8 ou 9,
où l'élément d'absorption d'énergie cinétique (14) présente une dureté allant de 40 à 80, de préférence de 35 à 65, conformément à l'échelle de type A de l'ASTM D2240.

11. Outil de coupe (1) selon l'une quelconque des revendications précédentes,
où une distance entre l'extrémité libre (7) et un centre de masse de l'élément en porte-à-faux (12) est plus courte qu'une distance entre l'extrémité fixée (6) et le centre de masse de l'élément en porte-à-faux (12).

12. Outil de coupe (1) selon l'une quelconque des revendications précédentes,
où une distance entre la surface inférieure (23) et l'élément en porte-à-faux (12) est plus courte qu'une distance entre la surface supérieure (22) et l'élément en porte-à-faux (12),
où une distance entre le siège de plaquette (11) et la surface supérieure (22) est plus courte qu'une distance entre le siège de plaquette (11) et la surface inférieure (23).

13. Procédé de réduction des vibrations durant une opération de découpe de métal, comprenant les étapes consistant à :
fournir une pièce d'ouvrage métallique (28),
fournir un outil de coupe (1) selon l'une quelconque des revendications précédentes,
entraîner en rotation la pièce d'ouvrage métallique (28) autour d'un axe de rotation (R2) de celle-ci,
agencer l'outil de coupe (1) de telle sorte que la tige en porte-à-faux (5) soit agencée radialement par rapport à l'axe de rotation (R2), et
découper la pièce d'ouvrage métallique (28) en déplaçant l'outil de coupe (1) vers l'axe de rotation (R2).
